# EUROPEAN PATENT APPLICATION

(11) **EP 0 537 579 A1**
(43) Date of publication of application: **21.04.1993**
(21) Application number: 92116942.1
(22) Date of filing: 05.10.1992
(51) Int. Cl.: C08J 11/22, C08L 75/04

(54) **Method for decomposing polymer having urethane and/or urea bonds**

(30) Priority: 17.10.1991 JP 269278/91
(71) Applicant: SUMITOMO BAYER URETHANE CO., LTD., Amagasaki (JP)
(72) Inventor: Ikuta, Hirsoshi, c/o Sumitomo Bayer, Amagasaki-shi, Hyogo-ken (JP); Nakatani, Koji, c/o Sumitomo Bayer, Amagasaki-shi, Hyogo-ken (JP); Kamiyama, Nobuhiro, c/o Sumitomo Bayer, Amagasaki-shi, Hyogo-ken (JP)
(74) Representative: Weber, Gerhard (DE)

(57) **Abstract**

A method for decomposing a polymer having urethane and/or urea bonds, comprising mixing and heating the polymer together with a ketone and/or aldehyde to obtain a liquid having low viscosity is described.

## Description

### BACKGROUND OF THE INVENTION

The present invention relates to a method for decomposing a polymer having urethane bonds and/or urea bonds.

Due to the increased commercial use of polymers having urethane and/or urea bonds, the disposal of wastes arising at the time of production or after use in the market has become a serious problem. One of the solutions to this problem is to decompose these wastes. Waste polymers can be efficiently disposed of by decomposition and they can be efficiently reused.

The use of an amine or alcohol as a decomposing agent together with an alkaline catalyst (such as an hydroxide of alkaline metal or alkaline earth metal) in the decomposition of polymers is described in Japanese Patent Kokoku Publication No. 21079/1968 and U. S. Patent 4,039,568. In this case, however, neutralization of the amine and the alkaline catalyst and filtration of generated salts are necessary for the reuse of the decomposition liquid.

The amount of decomposing agents to be used for the decomposition of the polymer is large in the prior art, requiring an amount equal to the weight of the polymer or, even more, in some cases.

When the alkaline catalyst is not used, the decomposition rate is small and the polymer does not decompose in most cases unless the temperature is high. Moreover, the amount of the decomposition liquid is increased and a viscosity of the liquid is high, thereby making after-treatments difficult.

An object of the present invention was to provide a method for decomposing a polymer having urethane and/or urea bonds, wherein alkaline catalyst is not used, wherein the amount of a decomposing agent is small, and wherein a decomposition liquid with low viscosity is obtained.

### DESCRIPTION OF THE INVENTION

The present invention is directed to a method for decomposing a polymer having urethane and/or urea bonds, which comprises mixing and heating the polymer together with a ketone and/or aldehyde to obtain a decomposition liquid having low viscosity.

The ketone and/or aldehyde is used as decomposing agents. An amine and/or alcohol may be used in addition to the ketone and/or aldehyde.

The polymer having urethane and/or urea bonds is produced in a known manner and can be manufactured by reacting an isocyanate compound with a compound having active hydrogen optionally in the presence of cross-linking agents, catalysts, foaming agents, stabilizers and other auxiliary agents.

The polymer is usually in the solid state at a room temperature and may be soft or rigid. The polymer may be non-cellular or cellular. The product may also be an integral skin foam. The polymer having urethane bonds and/or urea bonds may be linear, branched or cross-linked. The various materials used to produce polyurethane and/polyurea polymers are known in the art.

The isocyanate used to prepare the urethane and/or urea polymer may be substantially any polyisocyanate or modified polyisocyanate known in the polyurethane art. Specific examples of the polyisocyanates include aromatic polyisocyanates such as tolylene diisocyanate, diphenylmethane diisocyanate and polymeric diphenylmethane diisocyanate, and aliphatic polyisocyanates such as hexamethylene diisocyanate. Specific examples of modified polyisocyanates include, urethane modified polyisocyanates, allophanate modified polyisocyanates, urea modified polyisocyanates, biuret modified polyisocyanates, carbodiimide modified polyisocyanates, and isocyanate prepolymers.

The active hydrogen containing materials are also known in the art. Specific examples of the compound having active hydrogen include polyether polyols, polyester polyols and polyether polyamines. The molecular weight of such polyether polyols, polyester polyols and polyether polyamines is usually in the range of 400 to 20,000.

Useful cross-linking agents include glycols, amines and the like. Specific examples of the glycols are ethylene glycol, diethylene glycol, 1,4-butanediol, 1,3-butanediol, propylene glycol and dipropylene glycol. Specific examples of useful amines are 1-methyl-3,5-diethyl-2,4-diaminobenzene, 1-methyl-3,5-diethyl-2,6-diaminobenzene, 1-methyl-5-t-butyl-2,4-diaminobenzene, 1-methyl-3-t-butyl-2,4-diaminobenzene, 4,4'-diamine-3,5,3',5'-tetramethyldiphenylmethane, mono-ethanolamine, diethanolamine, triethanolamine, ethylenediamine and N-amioethyl-ethylenediamine. The molecular weight of the cross-linking agent is typically from 61 to 400. Useful ketones include aliphatic ketones, aromatic ketones and alicyclic ketones. Specific examples of useful ketones are acetone, methyl ethyl ketone, methyl isopropyl ketone, methyl n-propyl ketone, diethyl ketone, methyl isobutyl ketone, methyl n-hexyl ketone, phenyl n-propyl ketone, methyl benzyl ketone, dibenzyl ketone, cyclopentanone, cyclohexanone and isophorone.

Useful aldehydes include aliphatic aldehydes, aromatic aldehydes and alicyclic aldehydes. Specific examples of useful aldehydes are acetaldehyde, propionaldehyde, butylaldehyde, isobutylaldehyde, benzaldehyde, furfural and 1-cyclohexene-1-carboxyaldehyde.

Useful amines which can be used together with the ketones and/or aldehydes include aliphatic amines, aromatic amines, alicyclic amines and alkanolamines. Specific examples of useful amines are n-butylamine, n-hexylamine, di-n-butylamine, tri-n-butylamine, ethylenediamine, tetramethylenediamine, hexamethylenediamine, 2-(2-aminoethoxy)ethanol, monoethanolamine, diethanolamine, triethanolamine, polyoxypropyleneamine, aniline, methyaniline, ortho-, meta and para-toluidine, 1-methyl-3,5-diethyl-2,4-diaminobenzene, 1-methyl-3,5-diethyl-2,6-diaminobenzene, 4,4'-diaminodiphenylmethane, cyclohexylamine, piperazine and piperidine, 1-methyl-5-t-butyl-2,4-diaminobenzene, 1-methyl-3-t-butyl-2,6-diaminobenzene, 4,4'-diamino-3,5,3',5'-tetramethyldiphenylmethane and N-aminoethylethylenediamine.

Useful alcohols which can be used together with the ketones and/or aldehydes include monohydric alcohols and polyhydric alcohol, and their adduct with alkylene oxides. Specific examples of useful alcohols include methanol, ethanol, n-butanol, n-hexanol, ethylene glycol, propylene glycol, glycerol, trimethylolpropane, polyoxyethylene glycol and polyoxypropylene glycol . Specific examples of alkylene oxides are ethylene oxide, propylene oxide and butylene oxide.

The amount of the ketone and/or aldehyde as the decomposing agent to be used in the present invention is usually from 10 to 1000, preferably 10 to 100, parts by weight per 100 parts by weight of the polymer having urethane and/or urea bonds. If used, the amount of the amine and/or alcohol usually from 1 to 1000 parts by weight, preferably 10 to 1000 parts by weight. When the amine and/or alcohol is used in addition to the ketone and/or aldehyde, the combined amount of the ketone and/or aldehyde and the amine and/or alcohol to be used is usually from 10 to 2000 parts by weight per 100 parts by weight of the polymer having urethane and/or urea bonds. The decomposition temperature is usually in the range of from 100 to 250°C. The decomposition time is usually from 2 to 15 hours, and the decomposition pressure is usually from 0.1 to 200 kg/cm².

A polymer is liquefied and a decomposition liquid of low viscosity is obtained by the method according to the present invention. A viscosity of the decomposition liquid is usually from 10 to 10,000 cps at a room temperature. The polymer having urethane and/or urea bonds is decomposed to give a polymer having low molecular weight. The low molecular weight polymer is often in a liquid state at room temperature and may have active hydrogens. Specific examples of radicals having the active hydrogen are amino groups and hydroxyl groups. Urethane bonds and/or urea bonds may be contained in the low molecular weight polymer.

The decomposition liquid can be used as a raw material for producing a fresh polymer having urethane bonds and/or urea bonds. The decomposition liquid can be handled easily because the viscosity of the decomposition liquid is lower than that of a liquid obtained by the conventional method. Insoluble ingredients in the decomposition liquid (e.g., glass fibers or mineral fibers, or paint residues coated on the polymer) can be easily filtered off. It is also possible to separate and recover a single component by isolation through distillation.

The invention is further illustrated but is not intended to be limited by the following examples in which all parts and percentages are by weight unless otherwise specified.

### EXAMPLES

### Example 1

A piece of semi-rigid integral skin foam molded by the RIM process from 80 parts by weight of a polyether polyol (having a hydroxyl value of 28 and a molecular weight of 6,000), 20 parts by weight of a mixture of 1-methyl-3,5-diethyl-2,4-diaminobenzene and 1-methyl-3,5-diethyl-2,6-diaminobenzene and 50 parts by weight of a tripropylene glycol modified 4,4'-diphenylmethane diisocyanate (NCO content 23 % by weight) was decomposed.

In a pressure vessel with an internal volume of 300 cc, were charged 23 parts of cyclohexanone and 100 parts of the semi-rigid integral skin foam. The content of the vessel was heated for 15 hours by a heater so that the internal temperature was 200°C (the pressure was increased to 15 kg/cm² when heated). After cooling, a homogenous brown liquid was obtained. The hydroxyl value and viscosity at 25°C of the liquid were 198 and 4,500 cps, respectively.

### Example 2

In a pressure vessel with an internal volume of 300 cc, were charged 46 parts of cyclohexanone, 27 parts of polyoxypropylenediamine (trade name "Jeffamine D-230", manufactured by Sanseki Texaco Chemical Co.) and 100 parts of the semi-rigid integral skin foam used in Example 1. The content of the vessel was heated for 3 hours by a heater so that the internal temperature was 180°C (the pressure was increased to 15 kg/cm² when heated). The product, removed after cooling, was a brown transparent liquid having an hydroxyl value and viscosity at 25°C of 220 and 2,700 cps, respectively.

### Example 3

In a pressure vessel with an internal volume of 300 cc, were charged 23 parts of methyl isobutyl ketone, 13 parts of diethylene glycol and 100 parts of the semi-rigid integral skin foam used in Example 1. The content of the vessel was heated for 7 hours by a heater so that the internal temperature was 180°C (the pressure was increased to 16 kg/cm2 when heated). The product, removed after cooling, was a pale-brown liquid. The hydroxyl value and viscosity at 25°C were 275 and 3,500 cps, respectively.

### Example 4

In a pressure vessel with an internal volume of 300 cc, were charged 40 parts of furfural , 27 parts of Jeffamine D230 and 100 parts of the semi-rigid integral skin foam used in Example 1. The content of the vessel was heated for 5 hours by a heater so that the internal temperature was 1800C (the pressure was increased to 15 kg/cm² when heated). The product, removed after cooling, was a brown liquid. The hydroxyl value and viscosity at 25°C were 225 and 2,900 cps, respectively.

### Comparative Example 1

54 parts of Jeffamine D-230 and 100 parts of the semi-rigid integral skin foam used in Example 1 were charged in a pressure vessel with an internal volume of 300 cc. The content of the vessel was heated for 3 hours by a heater so that the internal temperature was 180°C. Decomposition did not proceed enough and a large amount of pieces of the foam remained. Therefore, the content of the vessel was heated for additional 10 hours so that the internal temperature was 200°C (the pressure was increased to 4 kg/cm² when heated). The product, removed after cooling was a brown viscous liquid, having an hydroxyl value and viscosity at 25°C of 237 and 15,000 cps, respectively.

### Comparative Example 2

In a pressure vessel with an internal volume of 300 cc, were charged 25 parts of 2-(2-aminoethoxy)ethanol and 100 parts of the semi-rigid integral skin foam used in Example 1. The content of the vessel was heated for 15 hours by a heater so that the internal temperature was 220°C (the pressure was increased to 3 kg/cm² when heated). The product, removed after cooling, was a dark brown viscous liquid, having a viscosity at 25°C of 35,000 cps.

### Example 5

A piece of polyurea semi-rigid integral skin foam molded by a RIM process from 80 parts by weight of a polyether polyamine (having an amine value of 30 and a molecular weight of 5,000), 20 parts by weight of a mixture of 1-methyl -3,5-diethyl-2,4-diaminobenzene and 1-methyl-3,5-diethyl-2,6-diaminobenzene and 50 parts by weight of a tripropylene glycol modified 4,4'-diphenylmethane diisocyanate (NCO content 23% by weight) was decomposed.

In a pressure vessel with an internal volume of 300 cc, were charged 23 parts of cyclohexanone and 100 parts of the polyurea semi-rigid integral skin foam. The content of the vessel was heated for 15 hours by a heater so that the internal temperature was 200°C (the pressure was increased to 14 kg/cm² when heated). After cooling, a homogenous brown liquid was obtained. The hydroxyl value and viscosity at 25°C of the liquid were 203 and 4,700 cps, respectively.

### Example 6

A piece of polyurethane semi-rigid integral skin foam molded by a RIM process from 90 parts by weight of polyether polyol (having a hydroxyl value of 56 and a molecular weight of 2,000), 10 parts by weight of ethylene glycol and 70 parts by weight of a tripropylene glycol and carbodiimid modified 4,4'-diphenylmethane diisocyanate(NCO content 23% by weight) was decomposed.

In a pressure vessel with an internal volume of 300 cc, were charged 32 parts of cyclohexanone and 100 parts of the polyurethane semi-rigid integral skin foam. The content of the vessel was heated for 15 hours by a heater so that the internal temperature was 200°C (the pressure was increased to 15 kg/cm2 when heated). After cooling, a homogeneous brown liquid was obtained. The viscosity at 25°C of the liquid was 3,800 cps.

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

### Example 7

A piece of polyurethane semi-rigid integral skin foam molded by RIM from 86 parts by weight of polyether polyol having a hydroxyl value of 56 mg KOH/g and a molecular weight of 2,000, 14 parts by weight of ethylene glycol and 82 parts by weight of a carbodiimide modified 4,4'-diphenylmethane diisocyanate was decomposed.

In a pressure vessel with an internal volume of 300 cc, were charged 35g of cyclohexanone and 100g of a piece of polyurethane semi-rigid integral skin foam. The content of the vessel was heated for 15 hours by a heater so that the internal temperature was 200° C (the pressure was increased to 10 Kg/cm² when heated). After cooling, a homogeneous brown decomposition liquid was obtained. The viscosity at 25° C of the decomposition liquid was 4,200 cps.

## Claims

1. A method for decomposing a polymer having urethane and/or urea bonds, comprising mixing and heating the polymer together with a ketone and/or aldehyde to obtain a liquid having low viscosity.

2. The method of Claim 1, wherein an amine and/or alcohol is included with the ketone and/or aldehyde.
